# EUROPÄISCHE PATENTANMELDUNG

(11) **EP 2 487 631 A1**
(43) Veröffentlichungstag der Anmeldung: **15.08.2012**
(21) Anmeldenummer: 12154271.6
(22) Anmeldetag: 07.02.2012
(51) Int. Cl.: G06Q 10/00, G06Q 99/00, G07C 5/08

(54) **Dokumentationsvorrichtung zur Dokumentation von Vorfällen und Daten an einem Land-, Luft- oder Wasserfahrzeug, insbesondere einem Kraftfahrzeug**

(30) Priorität: 10.02.2011 IT BZ20110005
(71) Anmelder: Lempfrecher, Wilhelm, 39030 Ahrntal (IT)
(72) Erfinder: Lempfrecher, Wilhelm, 39030 Ahrntal (IT)
(74) Vertreter: Ausserer, Anton

(57) **Zusammenfassung**

Beschrieben wird eine Dokumentationsvorrichtung zur Dokumentation von Vorfällen und von Daten an einem Land-, Luft- oder Wasserfahrzeug, insbesondere einem Kraftfahrzeug, zur Ermöglichung des Beweises von Vorfällen und der eindeutigen Rekonstruktion von Unfällen oder anderen Ereignissen, umfassend mindestens eine Kamera, mindestens ein Mikrofon und eine Datenspeichereinheit, die mit mindestens einer Kamera und mindestens einem Mikrofon verbunden ist.
Gemäss der Erfindung ist die mit mindestens einer Kamera und mindestens einem Mikrofon verbundene Speichereinheit, ihrerseits mit einem Lesegerät verbunden, das seinerseits mit einem Sender/Empfängergerät (20) oder Sender verbunden ist, der imstande ist, die vom Lesegerät erfassten Daten einem entfernten Verbraucher zu senden und/oder Daten von entfernten Sendern zu empfangen und sie der Speichereinheit zu senden.

## Beschreibung

Die Erfindung bezieht sich auf eine Dokumentationsvorrichtung zur Dokumentation von Vorfällen in und/oder um einem Land- oder Luftfahrzeug herum, insbesondere einem Kraftfahrzeug gemäß dem Oberbegriff des Patentanspruchs 1.

In der Veröffentlichung WO 00/28410 der Firma Phoenix Group Inc, (USA)wird ein Unfalldatensystem für Fahrzeuge beschrieben, das Unfallsinformationen aus einer Kamera speichert, die an einem Fahrzeug angebracht ist. Die von der Kamera empfangenen Unfallsinformationen werden automatisch über eine drahtlose Verbindung und ein Netzwerk an eine zentrale Datenbank und an dessen Netzwerksdatenbankserver gesendet.

Dieses System ermöglicht nur eine begrenzte Datensammlung aufgrund von Bildinformationen, jedoch werden keine Vorkehrungen vorgesehen, um zusammen mit den Bildinformationen auch weitere Informationen wie Audioinformationen zu erhalten. Zu weiteren Informationen zählen z.B. auch solche, die durch beliebige Sensoren, wie z.B. Drucksensoren an Leitplanken erhalten werden. Überdies ist dieses bekannte System automatisch ausgelegt und ermöglicht keinerlei Eingriff seitens einer Bedienungsperson.

Aus der EP 1003132 (unter dem Namen desselben Anmelders W.Lempfrecher) ist eine optoelektronisch-elektromagnetische Anlage mit Aufzeichnung der opto-akustischen Signale an Fahrzeugen bekannt, die mindestens eine Kamera und mindestens ein Mikrophon umfasst, die mit einer Speicherspur eines Tonaufzeichnungsgerätes verbunden sind.

Eine solche Anlage erlaubt die Aufzeichnung von Ereignissen an oder um ein Fahrzeug herum.

Die Speichermittel können nun beispielsweise Hard-Disks sein. Die Speicherung solcher Daten könnte lokal Probleme bei einer Beschädigung bereiten, die eine Speichereinheit bei Verlust der Daten erfahren könnte, die auf dieser gespeichert wurden. Überdies kann die Überprüfung der einwandfreien Betriebsweise des Systems nur erfolgen, indem Zugang zur Speichereinheit gefunden wird.

Die Daten der Speichereinheit sind überdies nur in einem zweiten Moment verwendbar.

Die Aufgabe der vorliegenden Erfindung ist die Ausführung einer Dokumentationsvorrichtung von Ereignissen und Daten auf einem Fahrzeug um den Beweis von Ereignissen zu erlauben und Unfälle oder weitere Ereignisse eindeutig zu rekonstruieren.

Eine weitere Aufgabe der vorliegenden Erfindung - gestützt auf Prinzipien EP 1003132 - besteht in der Speicherung und der Bereitstellung der mittels der Erfassungsvorrichtung erfassten Daten an Dritte.

Eine erfindungsgemäße Vorrichtung erfüllt die Aufzeichnung auch in einer selektiven Form von Daten aus einem Fahrzeug oder auch jene, die außerhalb desselben empfangen wurden. Diese Daten werden mittels Kameras, Mikrophonen, Sensoren, die Daten von den Fahrzeugsinstrumenten erfassen, bestimmt oder es können auch Daten sein, die außerhalb des Fahrzeuges gesendet wurden und wieder von diesen abgesendet werden, beispielsweise durch GPS, terrestrischen, jetzigen oder zukünftigen terrestrischen und/oder extraterrestrischen Führungssystemen, wie beispielsweise die Geschwindigkeit, Temperatur, den Verbrauch, Satellitenkoordinaten usw..

Die Erfassung der Daten kann kontinuierlich eingestellt oder über eine außerhalb des Fahrzeugs liegende Steuerung aktivierbar sein.

Diese Steuerung kann, z.B. für Außenkameras verwendet werden, die z.B. mittels eines Näherungsschalters derart aktiviert werden, dass ein Unfall / Vorfall aufgezeichnet wird, oder z.B. mittels einer Steuerung innerhalb des Fahrzeugs. Dies zum Beispiel, wenn ein Fahrzeugpassagier eine Gefahrensituation außerhalb des Fahrzeugs bemerkt. Weitere Vorrichtungen können kontinuierlich aufzeichnen, beispielsweise die Erfassung der Position mittels eines Satellitensystems oder die Erfassung der Daten des Fahrzeugs und/oder die Wettersituation wie z.B. Schnee, Eis oder Regen.

Diese Daten werden auf der Speichereinheit gespeichert, die im Fahrzeug angeordnet ist. Mit der Speichereinheit ist in einem erfindungsgemäßen System ein Datenübertragungssystem verbunden. Dieses Datenübertragungssystem kann die Daten bei Erfordernis mit gut definierten Zeitabständen oder kontinuierlich senden.

Die Dokumentationsvorrichtung von Ereignissen und Daten auf einem Fahrzeug, um den Beweis von Ereignissen zu erlauben und Unfälle oder andere Ereignisse eindeutig gemäß der Erfindung zu rekonstruieren, umfasst mindestens eine Kamera, mindestens ein Mikrophon und eine Datenspeichereinheit, die mit mindestens einer Kamera und mindestens einem Mikrophon verbunden ist, wobei die Datenspeichereinheit mit mindestens einer Kamera und das mindestens eine Mikrophon seinerseits mit einem Lesegerät verbunden ist, das seinerseits mit einem Sender verbunden ist, der imstande ist, die vom Lesegerät erfassten Daten einem entfernten Benutzer zu senden.

In dieser erfindungsgemäßen Vorrichtung ist zwischen dem Lesegerät und dem Sender ein Zeitschalter zwischengeschaltet.

In einer weiteren, bevorzugten Ausführungsform ist in der erfindungsgemäßen Vorrichtung zwischen dem Lesegerät und dem Sender eine mechanische Steuerung zwischengeschaltet.

Zur Ermöglichung einer verbesserten Übertragung der Daten umfasst der Sender der erfindungsgemäßen Vorrichtung einen Oszillator, einen Modulator, einen Verstärker und eine Antenne.

Die Datenübertragung kann mittels eines Satelliten, beispielsweise einer Wifi - Übertragung oder mittels des Funktelefonnetzes oder jeder künftigen Technik erfolgen.

Der Verbraucher, der die Daten empfängt, können beispielsweise eine Polizeistation oder ein Überwachungszentrum für Notfälle, private Stationen oder halböffentliche Stellen (Server) sein.

Insbesondere, sollte die Datenübertragung mechanisch aktiviert werden, kann sich die Bedienungsperson unverzüglich ein Bild der Situation machen, und den Rettungsdienst in Abhängigkeit der wirklichen Schwere der Situation koordinieren.

Insbesondere müssen die Personen im Fahrzeug nicht mehr die Situation vor Ort beschreiben, sondern können sofort eingreifen, während der Rettungsdienst sich selbst ein Bild der Situation macht.

Zur Ermöglichung einer Kontrolle an den Personen am Fahrzeug können Mittel vorgesehen sein, die einzelne Abtastvorrichtungen ein- oder ausschalten, wie eine interfonische Anlage am Fahrzeug, die z.B. mit einer Lautsprecheranlage und mit dem Mikrofon für die Antwort, für Anrufe des Rettungsdienstes, für Anforderungen außerhalb, seitens des Rettungsdienstes über Funktelefone, Funk usw. verbunden sind.

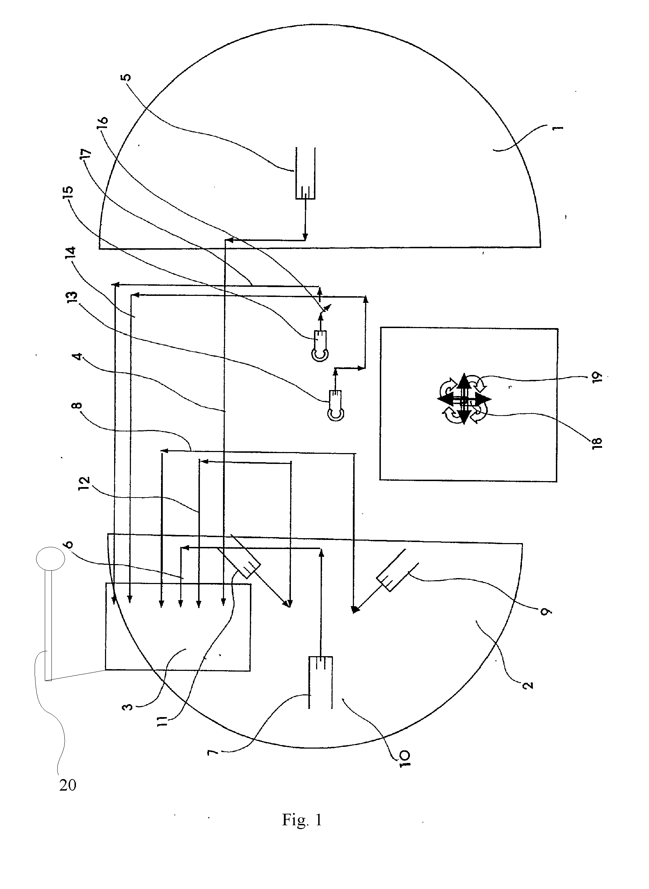

Weitere Einzelheiten und Merkmale gehen aus den Ansprüchen und aus der folgenden Beschreibung einer bevorzugten, in der Zeichnung dargestellten Ausführungsform hervor. Es zeigt,
die einzige Figur 1 ein Schaltbild eines Dokumentationssystems von Ereignissen in und/oder um ein Land-, Wasser- oder Luftfahrzeug, insbesondere eines Kraftfahrzeuges.

In der Figur 1 sind mit den Bezugsziffern 1 und 2 der Front- und Heckteil eines Kraftfahrzeuges schematisch dargestellt.

In diesem ist auf bekannte Art und Weise eine optoelektronisch-elektromechanische Anlage mit Aufzeichnung von Signalen installiert, das ein Audio-Video-Registriergerät 3 mit Aufzeichnungsspuren umfasst, in dem eine erste Spur über eine Signalleitung 4 mit einer Kamera 5 verbunden ist, eine zweite Spur über eine Signalleitung 6 mit einer Kamera 7, eine dritte Aufzeichnungsspur über eine Signalleitung 8 mit einer Kamera 9, die auf einer Hinterkonsole 10 des Kraftfahrzeuges angeordnet ist, eine weitere Spur über eine Signalleitung 12 mit einer Kamera 11, wieder eine weitere Aufzeichnungsspur über eine Signalleitung 14 mit einem Mikrofon 13 und eine letzte Aufzeichnungsspur unter Zwischenschaltung eines Schalters 16 über eine Signalleitung 17 mit einem zweiten Mikrofon 15. Zweckmäßiger Weise, falls erforderlich, sind die Kameras 5, 7, 9 und 11 mit einem Zeitschalter 18 verbunden, während die Kameras nacheinander folgend gemäß den Pfeilen 19 wechselweise verbindet, z.B. Kameras auf dem Dach eines Kraftfahrzeuges. Gemäß der Erfindung ist beim Dokumentationssystem von Ereignissen und von Daten auf einem Fahrzeug zur Ermöglichung des Beweises von Ereignissen und zur eindeutigen Rekonstruktion von Unfällen oder anderen Ereignissen, die durch die Spuren gebildete Speichereinheit mit mindestens einer Kamera verbunden und mindestens ein Mikrofon ist seinerseits mit einem Lesegerät verbunden, das seinerseits mit einem Sender 20 verbunden ist, der imstande ist, die vom Lesegerät erfassten Daten einem entfernten Verbraucher zu übertragen.

Es ist klar, dass die Telekameras und die Mikrofone in einer beliebigen Position eines Fahrzeuges installiert werden können, seien diese Positionen innerhalb oder außerhalb des Fahrzeugs, z.B. in einem Konstrukt auf dem Dach des Fahrzeuges selbst. Überdies können Konstruktionsgruppen vorgesehen sein, die eine Kamera und ein Mikrofon in demselben integriert enthalten, z.B. in der Form einer halbkugelförmigen Schale, (eines Stabes (z.B. an Polizeimotorrädern)in Fahrzeug-Antennen- Vorrichtungen, in Dachstrukturen von Polizeifahrzeugen, Rettungsfahrzeugen usw.).

## Patentansprüche

1. Dokumentationsvorrichtung zur Dokumentation von Vorfällen und von Daten an einem Land-, Luft- oder Wasserfahrzeug, insbesondere einem Kraftfahrzeug, zur Ermöglichung des Beweises von Vorfällen und der eindeutigen Rekonstruktion von Unfällen oder anderen Ereignissen, umfassend mindestens eine Kamera, mindestens ein Mikrofon und eine Datenspeichereinheit, die mit mindestens einer Kamera und mindestens einem Mikrofon verbunden ist, **dadurch gekennzeichnet, dass** die mit mindestens einer Kamera und mindestens einem Mikrofon verbundene Speichereinheit, ihrerseits mit einem Lesegerät verbunden ist, das seinerseits mit einem Sender/Empfängergerät (20) oder Sender verbunden ist, der imstande ist, die vom Lesegerät erfassten Daten einem entfernten Verbraucher zu senden und/oder Daten von entfernten Sendern zu empfangen und sie der Speichereinheit zu senden.

2. Dokumentationsvorrichtung nach Anspruch 1, **dadurch gekennzeichnet, dass** zwischen dem Lesegerät und dem Sendegerät ein Zeitschalter zwischengeschaltet ist.

3. Dokumentationsvorrichtung nach Anspruch 1, **dadurch gekennzeichnet, dass** zwischen dem Lesegerät und dem Sender eine mechanische Steuerung zwischengeschaltet ist, eventuell unter Zwischenschaltung einer geeigneten Software.

4. Dokumentationsvorrichtung nach Anspruch 1, **dadurch gekennzeichnet, dass** der Sender einen Oszillator, einen Modulator, einen Verstärker und eine Antenne umfasst.

5. Dokumentationsvorrichtung nach Anspruch 1, **dadurch gekennzeichnet, dass** zwischen dem Sender und dem Verbraucher ein Satellit geschalten ist.

6. Dokumentationsvorrichtung nach Anspruch 1, **dadurch gekennzeichnet, dass** der Verbraucher eine Polizeistation, eine oder mehrere private oder halböffentliche Stationen ist (Server).

7. Dokumentationsvorrichtung nach den vorstehenden Ansprüchen, **dadurch gekennzeichnet, dass** die Speichereinheit, mindestens eine Kamera, mindestens ein Mikrofon, das Lesegerät und der Sender einzeln einschaltbar und ausschaltbar sind

8. Dokumentationsvorrichtung nach den vorstehenden Ansprüchen, **dadurch gekennzeichnet, dass** die geeignete Hardware und Software vorgesehen sind.
